# EUROPÄISCHE PATENTSCHRIFT

(11) **EP 3 269 681 B1**
(45) Veröffentlichungstag und Bekanntmachung des Hinweises auf die Patenterteilung: **19.12.2018**
(21) Anmeldenummer: 16179142.1
(22) Anmeldetag: 13.07.2016
(51) Int. Cl.: C01B 3/04, C01B 13/02, B01J 23/42

(54) **VERFAHREN ZUR KATALYTISCHEN SPONTANZERSETZUNG VON WASSERSTOFFPEROXID**
METHOD FOR THE CATALYTIC SPONTANEOUS DECOMPOSITION OF HYDROGEN PEROXIDE
PROCEDE DE DECOMPOSITION CATALYTIQUE SPONTANEE D'HYDROGENE

(43) Veröffentlichungstag der Anmeldung: 17.01.2018
(73) Patentinhaber: Heraeus Deutschland GmbH & Co. KG, 63450 Hanau (DE)
(72) Erfinder: KIEMEL, Rainer, 63505 Langenselbold (DE); CASU, Santiago, 63457 Hanau (DE); KEMMER, Martina, 63796 Kahl am Main (DE); STENGEL, Sascha, 63619 Bad Orb (DE)
(74) Vertreter: Heraeus IP

(56) Entgegenhaltungen:
- EP-A1- 2 845 642
- WO-A1-2014/053351
- WO-A1-2015/189030

## Beschreibung

Die vorliegende Erfindung betrifft ein Verfahren zur katalytischen Spontanzersetzung von Wasserstoffperoxid.

Die katalytische Spontanzersetzung eines kleinen Volumens einer flüssigen Verbindung unter schneller Bildung eines großen Volumens gasförmiger Verbindungen kann technisch genutzt werden, beispielsweise in Gasgeneratoranwendungen oder in der Raumfahrt- und Satellitentechnik (beispielsweise zum Betrieb von Steuerdüsen als Einkomponententreibstoff oder zum Betrieb von Hybridmotoren als Sauerstofflieferant), um nur einige Anwendungen zu nennen.

Als ungiftiger Ersatz für ein bisher sehr gebräuchliches die katalytische Spontanzersetzung von Hydrazin nutzendes System gewinnt die an sich bekannte katalytische Spontanzersetzung von Wasserstoffperoxid und deren Anwendung beispielsweise in den vorerwähnten Technikfeldern an Interesse. Die katalytische Spontanzersetzung von Wasserstoffperoxid verläuft exotherm, dabei entstehen Temperaturen des gebildeten Sauerstoff/Wasserdampfgemischs beispielsweise im Bereich von 200 bis 1000 °C.

Die katalytische Spontanzersetzung von Wasserstoffperoxid zu Wasserdampf und Sauerstoff unter Verwendung platinhaltiger Festkörperkatalysatoren ist beispielsweise aus EP2845642A1 bekannt.

Platinhaltige Festkörperkatalysatoren umfassen üblicherweise poröse Katalysatorträger, deren Porenoberfläche mindestens eine katalytisch aktive Platinspezies aufweist. Zur Herstellung solcher platinhaltiger Festkörperkatalysatoren werden üblicherweise gelöste Platinsalze oder Platinkomplexverbindungen (z.B. Platinnitrat, Platinchloride) als Platinvorläufer verwendet. Das Aufbringen eines gelösten Platinvorläufers auf die Oberfläche eines Katalysatorträgers wird gemeinhin auch Imprägnieren genannt. Die Lösungen von Platinvorläufern können durch verschiedene Verfahren, wie z.B. kapillarkontrolliertes (*incipient wetness)* oder diffusionskontrolliertes Imprägnieren auf poröse Katalysatorträger aufgebracht werden. Anschließend können die Platinvorläufer durch Trocknung auf dem Katalysatorträger fixiert und danach bei höheren Temperaturen durch Kalzinieren zur katalytisch aktiven Platinspezies zersetzt werden. Aufgabe der vorliegenden Erfindung ist es, ein gegenüber dem Stand der Technik verbessertes Verfahren zur katalytischen Spontanzersetzung von Wasserstoffperoxid bereitzustellen. Der Fokus liegt dabei auf einem möglichst wirkstarken Katalysator, um mit dem zu findenden Verfahren eine gegebene Menge an Wasserstoffperoxid möglichst schnell unter Gasbildung zersetzen zu können. Je schneller die katalytische Spontanzersetzung des Wasserstoffperoxids und damit einhergehend die Gasbildung verläuft, desto weniger Zeit steht zur Verfügung, die bei der Zersetzung freiwerdende Wärme an die Umgebung abzugeben. Dementsprechend kann eine möglichst schnelle katalytische Spontanzersetzung des Wasserstoffperoxids eine relativ hohe Temperatur bzw. damit einhergehend eine relativ hohe Druckerhöhung im Sauerstoff/Wasserdampfgemisch unmittelbar nach dessen Bildung gewährleistet werden. Letzteres ist vorteilhaft insbesondere für solche Anwendungen, in denen von einer Druckgasentspannung Gebrauch gemacht wird, wie beispielsweise bei der eingangs schon erwähnten Verwendung in der Raumfahrt- und Satellitentechnik.

Gelöst wird die Aufgabe durch ein Verfahren gemäß Anspruch 1.

Hierin wird der Ausdruck "exotherm zersetzbarer Platinvorläufer" verwendet. Der dabei der Kürze halber verwendete Ausdruck "exotherm zersetzbar" bedeutet präziser ausgedrückt: "unter Wärmeeinwirkung exotherm zersetzbar" oder "thermisch exotherm zersetzbar". Mit anderen Worten, der Ausdruck "exotherm zersetzbarer Platinvorläufer" bedeutet, dass bei thermischer Zersetzung des mindestens einen exotherm zersetzbaren Platinvorläufers Reaktionswärme freigesetzt wird.

In einer Ausführungsform kann die thermische exotherme Zersetzung des mindestens einen exotherm zersetzbaren Platinvorläufers im Temperaturbereich von beispielsweise 50 bis 500 °C stattfinden; in einer anderen Ausführungsform setzt der mindestens eine exotherm zersetzbare Platinvorläufer Reaktionswärme bei seiner thermischen Zersetzung im Temperaturbereich von beispielsweise 150 bis 200 °C frei. Demgemäß kann es sich bei diesen Ausführungsformen um im Temperaturbereich von beispielsweise 50 bis 500 °C oder von beispielsweise 150 bis 200°C exotherm zersetzbare Platinvorläufer handeln.

Ob ein Platinvorläufer exotherm zersetzbar ist, lässt sich beispielsweise mittels DSC-Messung (Differential Scanning Calorimetry) feststellen, beispielsweise mit einer Aufheizrate von 5 oder 10°C pro Minute. Es kann zweckmäßig sein, die DSC-Messung unter Inertgas, beispielsweise unter Stickstoff oder Argon, durchzuführen, um mögliche Verfälschungen des Messergebnisses durch Luftzutritt zur Probe eines betreffenden Platinvorläufers zu vermeiden. Im Übrigen wird der Fachmann in Kenntnis eines zu vermessenden Platinvorläufers einen gegenüber einer Probe desselben chemisch inerten Probentiegel auswählen, beispielsweise einen Probentiegel aus Gold.

Im DSC-Diagramm (Wärmefluss aufgetragen gegen Temperatur) zeigt eine exotherme Zersetzung ein exothermes Signal. Bei einer endothermen Zersetzung verhält es sich genau umgekehrt, d.h. bei einer endothermen Zersetzung wird Wärme "verbraucht".

Zum Zweck der Charakterisierung mittels DSC können Lösungen von Platinvorläufern schonend unter Vermeidung einer Zersetzung, insbesondere unter Vermeidung einer Zersetzung zu einer katalytisch aktiven Platinspezies, bis zur Gewichtskonstanz eingetrocknet werden.

Im erfindungsgemäßen Verfahren kann unverdünntes Wasserstoffperoxid oder eine wässrige, beispielsweise 50 bis > 99 Gew.-% Wasserstoffperoxid enthaltende Zusammensetzung, insbesondere in Form einer Lösung, eingesetzt werden. Im Falle wässriger Lösungen enthalten diese neben Wasser und Wasserstoffperoxid sowie gegebenenfalls Stabilisatoren bevorzugt keine anderen bewusst zugesetzten Bestandteile. Die Wasserstoffperoxidkonzentration kann der Fachmann in Abhängigkeit von der technischen Anwendung wählen. Im Bereich Luft- und Raumfahrtantriebe wird bevorzugt mit einer Wasserstoffperoxidkonzentration im Bereich von 80 bis 100 Gew.-% gearbeitet.

Das Wasserstoffperoxid oder die wässrige Wasserstoffperoxid enthaltende Zusammensetzung (nachfolgend kurz "Wasserstoffperoxid") wird im erfindungsgemäßen Verfahren üblicherweise zum Feststoffkatalysator gegeben und nicht etwa umgekehrt.

Zweckmäßigerweise erfolgt die Zugabe des spontan zu zersetzenden Wasserstoffperoxids zum Feststoffkatalysator möglichst schnell und möglichst gleichmäßig, d.h. zweckmäßigerweise wird das Wasserstoffperoxid innerhalb einer kurzen Zeitspanne mit einem möglichst großen Anteil des Feststoffkatalysators, bevorzugt mit dem gesamten Feststoffkatalysator, gleichmäßig in Kontakt gebracht. Die Dauer besagter kurzer Zugabezeitspanne hängt unter anderem vom zuzugebenden Volumen des Wasserstoffperoxids sowie von Zugabemethode und -equipment ab und liegt in einer Größenordnung von beispielsweise bis zu einer Minute, d.h. jede einzelne Zugabe erfolgt üblicherweise kontinuierlich ohne Unterbrechung. Im Falle einer gepulsten Zugabe ist jeder einzelne Puls als einzelne Zugabe zu verstehen. Beispiele für geeignete Zugabemethoden des Wasserstoffperoxids zum Feststoffkatalysator sind Versprühen als Tröpfchen oder Zudosieren als Flüssigkeit. Beispielsweise kann ein Versprühen mittels einer oder mehrerer Düsen auf oder in den Feststoffkatalysator erfolgen. Ein Flüssigzudosieren zum Feststoffkatalysator kann beispielsweise mittels einer Pumpe oder Druckpumpe erfolgen, wobei zweckmäßigerweise Vorrichtungen, die ein gleichmäßiges Inkontaktbringen von Wasserstoffperoxid mit dem Feststoffkatalysator gewährleisten. Ein Beispiel für eine solche Vorrichtung ist eine Flüssigkeitsverteilung bewirkende Lochplatte; die Wirkungsweise davon ist der einer Dusche ähnlich.

Beispielsweise kann sich der Feststoffkatalysator in einem Hohlzylinder befinden, wobei das Wasserstoffperoxid von der einen Seite zudosiert, am Feststoffkatalysator zersetzt wird und die gebildeten Zersetzungsgase den Hohlzylinder an der entgegen gesetzten Seite verlassen.

Im erfindungsgemäßen Verfahren wird ein Feststoffkatalysator, der unter Verwendung mindestens eines exotherm zersetzbaren Platinvorläufers hergestellt worden ist, verwendet. Der Feststoffkatalysator umfasst einen oder mehrere poröse Katalysatorträger und mindestens eine katalytisch aktive Platinspezies bzw. einen oder mehrere poröse Katalysatorträger mit mindestens einer katalytisch aktive Platinspezies oder, noch anders ausgedrückt, einen oder mehrere poröse Katalysatorträger, deren Porenoberfläche mindestens eine katalytisch aktive Platinspezies umfasst.

Der Feststoffkatalysator kann beispielsweise als mit Washcoat beschichteter oder unbeschichteter Monolithkatalysator, als mit Washcoat beschichtete oder unbeschichtete Schüttgutkörper umfassender Schüttgutkatalysator oder Katalysatorbett, oder als mit Washcoat beschichteter Metallwaben- oder Metallgestrickkatalysator ausgebildet sein.

Die mindestens eine katalytisch aktive Platinspezies entstammt zumindest anteilig dem mindestens einen exotherm zersetzbaren Platinvorläufer oder, genauer gesagt, das im im erfindungsgemäßen Verfahren verwendeten Feststoffkatalysator enthaltene Platin der mindestens einen katalytisch aktiven Platinspezies entstammt zumindest anteilig, beispielsweise zu 30 % oder mehr, bevorzugt vollständig dem mindestens einen exotherm zersetzbaren Platinvorläufer.

Die zumindest anteilig dem mindestens einen exotherm zersetzbaren Platinvorläufer entstammende mindestens eine katalytisch aktive Platinspezies kann unter exothermer Zersetzung des mindestens einen exotherm zersetzbaren Platinvorläufers erzeugt werden und sie kann als elementares Platin und/oder als Platinverbindung (z.B. Platinoxid) auf dem oder den porösen Katalysatorträgern des im erfindungsgemäßen Verfahren verwendeten Feststoffkatalysators, insbesondere auf der Porenoberfläche des oder der porösen Katalysatorträger des im erfindungsgemäßen Verfahren verwendeten Feststoffkatalysators, vorliegen.

Typische Monolithkatalysatoren basieren zum Beispiel auf einem Wabenkörper, beispielsweise einem Wabenkörper aus refraktärem Material oder einem keramischen Wabenkörper, mit einer Vielzahl von nebeneinander angeordneten Kanälen oder einer offenporigen Schaumstruktur mit miteinander verbundenen Hohlräumen.

Mit anderen Worten, im Falle eines Monolithkatalysators kann dieser selber den porösen Katalysatorträger darstellen und/oder mit einem Washcoat beschichtet sein, wobei die Washcoatschicht poröse Katalysatorträger in Form poröser Partikel enthält. Die mindestens eine katalytisch aktive Platinspezies kann sich dabei auf der Porenoberfläche des porösen keramischen Wabenkörpers und/oder der porösen Partikel in der Washcoatschicht befinden.

Im Falle von Schüttgutkatalysatoren oder Katalysatorbetten liegen die porösen Katalysatorträger als Schüttgutkörper oder Schüttgutformkörper (wie z.B. Granulat, Presslinge oder Extrudate wie Zylinder, Ringe, Kugeln, Quader, Plättchen) vor. Die Durchmesser oder die Grösse solcher Schüttgutkörper oder -formkörper können beispielsweise im Bereich von etwa 0,5 bis 30, bevorzugt 0,5 bis 20, insbesondere 0,5 bis 15 Millimeter liegen. Mit anderen Worten, die Schüttgutkörper oder -formkörper können selber poröse Katalysatorträger darstellen und/oder mit einem Washcoat beschichtet sein, wobei die Washcoatschicht poröse Katalysatorträger in Form poröser Partikel enthält. Die mindestens eine katalytisch aktive Platinspezies kann sich dabei auf der Porenoberfläche der porösen Schüttgutkörper oder -formkörper und/oder der porösen Partikel in der Washcoatschicht befinden, üblicherweise allerdings insbesondere auf der Porenoberfläche der porösen Schüttgutkörper oder -formkörper.

Im Falle von Metallwaben- oder Metallgestrickkatalysatoren ist die Metalloberfläche im allgemeinen mit einem Washcoat beschichtet, wobei die Washcoatschicht poröse Katalysatorträger in Form poröser Partikel enthält. Die mindestens eine katalytisch aktive Platinspezies befindet sich dabei üblicherweise auf der Porenoberfläche der porösen Partikel in der Washcoatschicht.

Hierin wurde schon mehrfach der dem Fachmann wohlbekannte Begriff "Washcoat" vorerwähnt; zu unterscheiden ist zwischen einer Washcoat-Slurry und einer daraus applizierten Washcoatschicht. Bei einer Washcoat-Slurry handelt es sich um eine flüssige Beschichtungszusammensetzung, üblicherweise in Form einer wässrigen Suspension, die neben Wasser poröse Katalysatorträgerpartikel mit Teilchengrößen beispielsweise im Bereich von 2 - 100 µm enthält.

Zur Materialauswahl für die porösen Katalysatorträgerpartikel gilt das Gleiche wie zur Materialauswahl für poröse Katalysatorträger in der weiteren Folge noch erläutert.

Washcoat bzw. Washcoat-Slurry kann in zwei grundsätzlich verschiedenen Ausführungsformen existieren.

In der einen Ausführungsform kann eine solche Washcoat-Suspension einen oder mehrere Edelmetallvorläufer enthalten, aus denen nach Applikation, Trocknen und Kalzinieren des zuvor auf ein Substrat aufgebrachten Washcoats katalytisch aktive Edelmetallspezies gebildet werden. Der Edelmetallvorläufer kann dabei mittels einer der nacherwähnten Imprägniermethoden mit den Bestandteile des Washcoats bildenden porösen Katalysatorträgerpartikeln in Kontakt gebracht werden. Dabei können die imprägnierten porösen Katalysatorträgerpartikel separat hergestellt, d.h. imprägniert, getrocknet und kalziniert worden sein und so mit katalytisch aktiver Edelmetallspezies schon ausgestattet in die Washcoat-Slurry eingearbeitet werden. Alternativ ist es möglich, den Imprägnierschritt als Prozessschritt der Washcoat-Slurry auszuführen, wobei die Trocknung und Kalzinierung erst nach Applikation der Washcoat-Slurry erfolgt, d.h. erst bei Kalzinierung der aus der Washcoat-Slurry aufgebrachten Washcoatschicht bildet sich die katalytisch aktive Edelmetallspezies aus. Im Fall der vorliegenden Erfindung umfasst oder handelt es sich bei dem oder den Edelmetallvorläufern bzw. der oder den daraus gebildeten katalytisch aktiven Edelmetallspezies um den mindestens einen exotherm zersetzbaren Platinvorläufer bzw. die daraus beim Kalzinieren gebildete mindestens eine katalytisch aktive Platinspezies.

In der anderen Ausführungsform kann eine Washcoat-Slurry allerdings auch frei von jeglichen Edelmetallvorläufern formuliert sein und in dieser Form appliziert, getrocknet und kalziniert werden. In diesem Fall ist es zur Ausstattung der in der kalzinierten Washcoatschicht befindlichen porösen Katalysatorträgerpartikel mit katalytisch aktiver Edelmetallspezies notwendig, Edelmetallvorläufer (üblicherweise als wässrige Lösung) in einem eigenen Verfahrensschritt mit der noch edelmetallfreien aber schon kalzinierten Washcoatschicht durch Imprägnieren in Kontakt zu bringen und nach Trocknung und Kalzinieren die katalytisch aktive Edelmetallspezies auszubilden. Im Fall der vorliegenden Erfindung umfasst oder handelt es sich bei dem oder den Edelmetallvorläufern bzw. der oder den daraus gebildeten katalytisch aktiven Edelmetallspezies um den mindestens einen exotherm zersetzbaren Platinvorläufer bzw. die daraus beim Kalzinieren gebildete mindestens eine katalytisch aktive Platinspezies.

Die verschiedenen Typen der im erfindungsgemäßen Verfahren einsetzbaren Feststoffkatalysatoren haben gemein, dass sie einen oder mehrere poröse Katalysatorträger und mindestens eine katalytisch aktive Platinspezies, die dem mindestens einen exotherm zersetzbaren Platinvorläufer zumindest anteilig entstammt, umfassen. Mit anderen Worten, die verschiedenen Typen der im erfindungsgemäßen Verfahren einsetzbaren Feststoffkatalysatoren haben gemein, dass sie einen oder mehrere poröse Katalysatorträger mit mindestens einer katalytisch aktiven Platinspezies umfassen, wobei die katalytisch aktive Platinspezies dem mindestens einen exotherm zersetzbaren Platinvorläufer zumindest anteilig entstammt. Mit noch anderen Worten, die verschiedenen Typen der im erfindungsgemäßen Verfahren einsetzbaren Feststoffkatalysatoren haben gemein, dass sie einen oder mehrere poröse Katalysatorträger umfassen, wobei die Porenoberfläche der porösen Katalysatorträger mindestens eine katalytisch aktive Platinspezies, die dem mindestens einen exotherm zersetzbaren Platinvorläufer zumindest anteilig entstammt, umfasst.

Der Platingehalt im im erfindungsgemäßen Verfahren verwendeten Feststoffkatalysator beträgt beispielsweise 0,5 bis 200 g pro Liter Katalysatorvolumen.

Zur Herstellung von porösen Katalysatorträgern mit mindestens einer katalytisch aktiven Platinspezies kann eine im Stand der Technik übliche, dem Fachmann bekannte Vorgehensweise angewendet werden, nämlich das in Kontakt bringen des oder der porösen Katalysatorträger mit einer Lösung eines Platinvorläufers, gefolgt von Trocknen und anschließendem Kalzinieren des oder der so imprägnierten Katalysatorträger unter Ausbildung der katalytisch aktiven Platinspezies auf dem oder den porösen Katalysatorträgern. Im Fall der vorliegenden Erfindung bedeutet dies, dass eine Lösung, vorzugsweise eine wässrige Lösung mindestens eines exotherm zersetzbaren Platinvorläufers mit dem oder den porösen Katalysatorträgern in Kontakt gebracht werden kann. Dabei kann der mindestens eine exotherm zersetzbare Platinvorläufer auf den oder die porösen Katalysatorträger aufgebracht werden. Das Aufbringen des mindestens einen exotherm zersetzbaren Platinvorläufers, auch Imprägnieren genannt, kann über verschiedene Verfahren erfolgen.

Beispielsweise kann die Lösung des mindestens einen exotherm zersetzbaren Platinvorläufers durch Kapillarkräfte getrieben im oder in den porösen Katalysatorträgern aufgesogen werden, sodass das Volumen der Lösung annähernd dem Porenvolumen des oder der porösen Katalysatorträger entspricht (incipient wetness method). Im Anschluss ans Imprägnieren können der oder die porösen Katalysatorträger getrocknet werden. Dieser Trocknungsschritt geschieht vorzugsweise bei Temperaturen im Bereich von 20 bis 150°C und kann dazu dienen, den mindestens einen exotherm zersetzbaren Platinvorläufer auf der Porenoberfläche zu fixieren. Bevorzugt werden mindestens 90 % des Lösungsmittels durch das Trocknen entfernt oder der oder die imprägnierten porösen Katalysatorträger können auch bis zur Gewichtskonstanz getrocknet werden. Nach dem Trocknen können der oder die imprägnierten porösen Katalysatorträger bei Temperaturen beispielsweise im Bereich von 150 - 700°C kalziniert werden. Das Kalzinieren kann sowohl unter Atmosphärenbedingungen als auch unter Inertgasbedingungen erfolgen. Bei dem Kalzinieren kann eine exotherme Zersetzung des mindestens einen exotherm zersetzbaren Platinvorläufers unter Bildung der mindestens einen katalytisch aktiven Platinspezies erfolgen. Die exotherme Zersetzung des mindestens einen exotherm zersetzbaren Platinvorläufers zur mindestens einen katalytisch aktiven Platinspezies kann teilweise oder vollständig erfolgen. Das Trocknen und das Kalzinieren können auch in einem gemeinsamen Schritt erfolgen.

Der oder die porösen Katalysatorträger können prinzipiell aus jedem Material bestehen, das bei den während des erfindungsgemäßen Verfahrens im laufenden Betrieb am Feststoffkatalysator auftretenden hydrothermalen Bedingungen Temperaturen von beispielsweise 200 bis 1000 °C, strukturstabil ist. Insbesondere kann das Material der porösen Katalysatorträger refraktäre Materialien, beispielsweise keramische Materialien, umfassen oder aus diesen bestehen. Geeignete refraktäre Materialien können beispielsweise ausgewählt sein aus der Gruppe bestehend aus Aluminiumoxiden, Titandioxid, Zirkonoxiden, Cer/Zirkon-Mischoxiden, Aluminiumsilikaten (z.B. Cordierit, Mullit), Siliziumcarbiden und Siliziumnitriden.

Die genannten refraktären Materialien können alleine oder in Kombination, beispielsweise als Mischungen, vorliegen. Bevorzugte refraktäre Materialien können beispielsweise ausgewählt sein aus der Gruppe der Aluminiumoxide, beispielsweise α- oder γ-Aluminiumoxid. Die refraktären Materialien können Dotierungen aufweisen. Geeignete Dotierungsmittel können ausgewählt sein aus der Gruppe bestehend aus Seltenerdmetallen, Übergangsmetallen und Erdalkalimetallen. Insbesondere kann das Dotierungsmittel mindestens ein Element ausgewählt aus der Gruppe bestehend aus La, Ba, Sr, Zr und Mn sein. Die Dotierung kann beispielsweise dazu dienen, die Temperaturbeständigkeit eines porösen Aluminiumoxids zu erhöhen.

Es ist erfindungswesentlich, dass der im erfindungsgemäßen Verfahren verwendete Feststoffkatalysator unter Verwendung mindestens eines exotherm zersetzbaren Platinvorläufers hergestellt worden ist, oder, anders ausgedrückt und wie auch dem Vorerwähnten schon zu entnehmen ist, ist es erfindungswesentlich, dass die als elementares Platin und/oder als Platinverbindung (z.B. Platinoxid) auf der Porenoberfläche des oder der porösen Katalysatorträger vorliegende mindestens eine katalytisch aktive Platinspezies zumindest anteilig unter Verwendung mindestens eines exotherm zersetzbaren Platinvorläufers, insbesondere unter Verwendung einer Lösung dessen, hergestellt worden ist und demzufolge dem mindestens einen exotherm zersetzbaren Platinvorläufer zumindest anteilig entstammt. Es wurde gefunden, dass unter Verwendung mindestens eines exotherm zersetzbaren Platinvorläufers hergestellte Feststoffkatalysatoren eine in Hinblick auf die katalytische Spontanzersetzung von Wasserstoffperoxid stärkere katalytische Wirkung entfalten als Feststoffkatalysatoren, die ohne Verwendung exotherm zersetzbarer Platinvorläufer hergestellt worden sind. Eine Bestimmung der katalytischen Wirkung kann im Labor unter Verwendung einer wässrigen beispielsweise aus praktischen Gründen 10 gewichts-%igen Lösung von Wasserstoffperoxid als Testsubstanz durchgeführt werden, indem man das Wasserstoffperoxid mit dem zu testenden Feststoffkatalysator in Kontakt bringt und die Zeit misst, innerhalb derer die Zersetzungsreaktion bzw. die Gasbildung abläuft.
Der mindestens eine exotherm zersetzbare Platinvorläufer wird bzw. wurde insbesondere in Form einer Lösung, speziell in Form einer wässrigen Lösung, zur Herstellung des Feststoffkatalysators bzw. des oder der porösen Katalysatorträger mit der mindestens einen katalytisch aktiven Platinspezies verwendet.

Bei dem mindestens einen exotherm zersetzbaren Platinvorläufer handelt es sich um Platinoxalat-Komplexe und Platinethanolamin.

Wie vorerwähnt kann es sich bei dem mindestens einen exotherm zersetzbaren Platinvorläufer um im Temperaturbereich von beispielsweise 50 bis 500 °C oder von beispielsweise 150 bis 200°C exotherm zersetzbare Platinvorläufer handeln.
In einer Ausführungsform zeigen bevorzugte exotherm zersetzbare Platinvorläufer bei ihrer thermischen Zersetzung im Temperaturbereich von beispielsweise 50 bis 500 °C oder 150 bis 200 °C ausschließlich Exothermie, d.h. im vorerwähnten DSC-Diagramm finden sich im entsprechenden Temperaturbereich ausschließlich exotherme Signale. In einer weiteren Ausführungsform lassen sich bevorzugte exotherm zersetzbare Platinvorläufer im Temperaturbereich von beispielsweise 50 bis 500°C oder 150 bis 200°C unter Freisetzung gasförmiger Zersetzungsprodukte thermisch zersetzen.
In noch einer weiteren Ausführungsform lassen sich bevorzugte exotherm zersetzbare Platinvorläufer im Temperaturbereich von beispielsweise 50 bis 500°C oder 150 bis 200°C unter Freisetzung gasförmiger Zersetzungsprodukte thermisch zersetzen und zeigen dabei ausschließlich Exothermie.

Beispiele für die exotherm zersetzbare Platinvorläufer sind Platinoxalat-Komplexe. Platinoxalat-Komplexe sind schon lange bekannt. So haben Krogmann und Dodel schon 1966 zum Beispiel für einen Platinoxalat-Komplex im festen Zustand die Formel (H₃O)_{1,6}[Pt(C₂O₄)₂] ▪ 2H₂O mit Platin einer mittleren Oxidationsstufe von 2,4 angegeben. Bei Platinoxalat-Komplexen handelt es sich um komplexe Zusammensetzungen, die sich herstellen lassen durch Umsetzung von H₂Pt(OH)₆ mit Oxalsäure in wässriger Lösung. Die Komplexe können neben Oxalat auch Wasser enthalten. Bevorzugte Platinoxalat-Komplexe und ihre Herstellung sind beispielsweise auch in WO2014/053351 A1 beschrieben; dort werden als Ausgangsstoffe insbesondere Platin-(IV)-hydroxosäure und Oxalsäure besonders bevorzugt verwendet und dabei als geeignetes stöchiometrisches Verhältnis festgestellt, dass Oxalsäure in 1,8 bis 2,8 molaren Äquivalenten in Bezug auf Platin in Form des Platin-Präkursors, d.h. der Platin-(IV)-hydroxosäure zugegeben wird.
Es ist vorteilhaft, dass sich Platinoxalat-Komplexe bei ihrer Kalzinierung neben der Bildung von katalytisch aktiver Platinspezies praktisch rückstandsfrei insbesondere beispielsweise ohne Entwicklung giftiger Stickoxide exotherm zersetzen lassen.

Ein weiteres Beispiel eines exotherm zersetzbaren Platinvorläufers ist das beispielsweise von HERAEUS unter der Bezeichnung "Pt EA" in Lösung angebotene Bis(ethanolammonium)hexahydroxoplatin [(HOCH₂CH₂NH₄)₂[Pt(OH)₆], letzteres in der weiteren Folge als "Platinethanolamin" abgekürzt. Es kann zweckmäßig sein, Platinethanolamin in Kombination mit Zucker, beispielsweise Saccharose, bei der Herstellung des Feststoffkatalysators zu verwenden.
Bei der Herstellung eines im erfindungsgemäßen Verfahren einsetzbaren Feststoffkatalysators unter Verwendung mindestens eines exotherm zersetzbaren Platinvorläufers wie beispielsweise Platinoxalat-Komplexe und/oder Platinethanolamin ist es nicht notwendig, kann aber zweckmäßig sein, nach der Kalzinierung eine übliche dem Fachmann bekannte Reduktionsbehandlung des Katalysators durchzuführen, beispielsweise mit Wasserstoff oder einem Wasserstoff/Inertgas-Gemisch.

In einer Ausführungsform können neben dem mindestens einen exotherm zersetzbaren Platinvorläufer auch Vorläufer anderer Metalle oder Edelmetalle, insbesondere Vorläufer von Palladium, Ruthenium und/oder Rhodium zur Herstellung des im erfindungsgemäßen Verfahren verwendeten Feststoffkatalysators verwendet werden bzw. worden sein.

In einer anderen Ausführungsform können neben dem mindestens einen exotherm zersetzbaren Platinvorläufer keine Vorläufer anderer Metalle oder Edelmetalle zur Herstellung des im erfindungsgemäßen Verfahren verwendeten Feststoffkatalysators verwendet werden bzw. worden sein.

In einer weiteren Ausführungsform können neben dem mindestens einen, insbesondere nur einen einzigen, exotherm zersetzbaren Platinvorläufer keine nicht-exotherm zersetzbaren Platinvorläufer zur Herstellung des im erfindungsgemäßen Verfahren verwendeten Feststoffkatalysators verwendet werden bzw. worden sein, wobei Vorläufer anderer Metalle oder Edelmetalle als Platin verwendet werden bzw. worden sein können, bevorzugt jedoch auch letzteres nicht. Beispiele für nicht-exotherm zersetzbare Platinvorläufer sind endotherm zersetzbare Platinvorläufer sowie Platinvorläufer, die im vorerwähnten DSC-Diagramm weder Exothermie noch Endothermie zeigen.

Insbesondere bevorzugt kann der im erfindungsgemäßen Verfahren verwendete Feststoffkatalysator unter ausschließlicher Verwendung von Platinethanolamin und/oder Platinoxalat-Komplexen, d.h. ohne Verwendung anderer Vorläufer weder von Platin noch von anderen Metallen oder Edelmetallen hergestellt werden bzw. worden sein.

Wie schon gesagt, kann der im erfindungsgemäßen Verfahren verwendete Feststoffkatalysator in Form eines der schon genannten einen oder mehrere poröse Katalysatorträger und mindestens eine katalytisch aktive Platinspezies umfassenden Feststoffkatalysatoren vorliegen und dabei insbesondere in folgenden Ausführungsformen:
- als mit einer Lösung des mindestens einen exotherm zersetzbaren Platinvorläufers imprägnierter und unter Bildung der mindestens einen katalytisch aktiven Platinspezies kalzinierter Monolithkatalysator; poröser Katalysatorträger ist hier der Monolith als solcher,
- als mit einer unter Bildung der mindestens einen katalytisch aktiven Platinspezies kalzinierter Washcoatschicht versehener Monolithkatalysator; poröse Katalysatorträger sind hier die mit der mindestens einen katalytisch aktiven Platinspezies ausgestatteten porösen Katalysatorträgerpartikel innerhalb der Washcoatschicht,
- als mit einer Lösung des mindestens einen exotherm zersetzbaren Platinvorläufers imprägnierter und unter Bildung der mindestens einen katalytisch aktiven Platinspezies kalzinierter und zusätzlich mit einer unter Bildung der mindestens einen katalytisch aktiven Platinspezies kalzinierten Washcoatschicht versehener Monolithkatalysator; poröse Katalysatorträger sind hier der Monolith als solcher als auch die mit der mindestens einen katalytisch aktiven Platinspezies ausgestatteten porösen Katalysatorträgerpartikel innerhalb der Washcoatschicht,
- als Schüttgutkatalysator oder Katalysatorbett mit mit einer Lösung des mindestens einen exotherm zersetzbaren Platinvorläufers imprägnierten und unter Bildung der mindestens einen katalytisch aktiven Platinspezies kalzinierten Schüttgutformkörpern; poröse Katalysatorträger sind hier die Schüttgutformkörper als solche,
- als Schüttgutkatalysator oder Katalysatorbett mit mit einer unter Bildung der mindestens einen katalytisch aktiven Platinspezies kalzinierter Washcoatschicht versehenen Schüttgutformkörpern; poröse Katalysatorträger sind hier die mit der mindestens einen katalytisch aktiven Platinspezies ausgestatteten porösen Katalysatorträgerpartikel innerhalb der Washcoatschicht,
- als Schüttgutkatalysator oder Katalysatorbett mit mit einer Lösung des mindestens einen exotherm zersetzbaren Platinvorläufers imprägnierten und unter Bildung der mindestens einen katalytisch aktiven Platinspezies kalzinierten und zusätzlich mit einer unter Bildung der mindestens einen katalytisch aktiven Platinspezies kalzinierten Washcoatschicht versehenen Schüttgutformkörpern; poröse Katalysatorträger sind hier die Schüttgutformkörper als solche als auch die mit der mindestens einen katalytisch aktiven Platinspezies ausgestatteten porösen Katalysatorträgerpartikel innerhalb der Washcoatschicht,
- als mit einer unter Bildung der mindestens einen katalytisch aktiven Platinspezies kalzinierten Washcoatschicht versehener Metallwabenkatalysator; poröse Katalysatorträger sind hier die mit der mindestens einen katalytisch aktiven Platinspezies ausgestatteten porösen Katalysatorträgerpartikel innerhalb der Washcoatschicht,
- als mit einer unter Bildung der mindestens einen katalytisch aktiven Platinspezies kalzinierten Washcoatschicht versehener Metallgestrickkatalysator; poröse Katalysatorträger sind hier die mit der mindestens einen katalytisch aktiven Platinspezies ausgestatteten porösen Katalysatorträgerpartikel innerhalb der Washcoatschicht.

### Beispiele

Die in den Beispielen verwendeten Platinoxalat-Komplexe wurden gemäß WO2014/053351 A1, Beispiel 1 hergestellt. Bei dem in den Beispielen verwendeten Platinethanolamin handelte es sich um das schon vorerwähnte von HERAEUS vertriebene Produkt.

### Beispiel 1 (Herstellung eines Feststoffkatalvsators)

40 ml einer wässrigen Lösung von Platinoxalat-Komplexen (5 g Pt in 40 ml Lösung) wurden in einer Rollierflasche mit 100 g Al₂O₃-Granulat (Durchmesser ca. 1 mm) vermischt. Das Granulat wurde zunächst bei 70°C getrocknet. Das so imprägnierte und getrocknete Granulat wurde danach in einem Trockenschrank unter Stickstoffatmosphäre bei 600°C kalziniert. Anschließend wurde auf Raumtemperatur abgekühlt und das erhaltene Material einer zweistündigen Reduktionsbehandlung mit Formiergas (5 Vol.-% Wasserstoff/95 Vol.-% Stickstoff) bei 300 °C unterworfen.

### Beispiel 2

Analog zu Beispiel 1 wurde ein Feststoffkatalysator hergestellt, wobei anstelle der Lösung von Platinoxalat-Komplexen eine wässrige Lösung von Platinethanolamin und Saccharose (5 g Pt und 5g Saccharose in 40 ml Lösung) verwendet wurde.

### Referenzbeispiel 3

Analog zu Beispiel 1 wurde ein Feststoffkatalysator hergestellt, wobei anstelle der Lösung von Platinoxalat-Komplexen eine wässrige salpetersaure Lösung von Platinnitrat (5 g Pt in 40 ml Lösung) verwendet wurde.

### Beispiel 4 (Test der katalytischen Aktivität der Feststoffkatalysatoren)

200 mg des Feststoffkatalysators aus Beispiel 1, 2 oder 3 wurden jeweils in einen Kolben mit Gasauslass gegeben. Der Kolben wurde mit einer Durchstechmembran verschlossen und der Gasauslass mit einer Einrichtung zur Beobachtung einer Gasentwicklung verbunden.

Anschließend wurde mittels einer durch die Durchstechmembran durchgestochenen Spritze ein Milliliter einer 10 gew.-%igen wäßrigen Lösung von Wasserstoffperoxid innerhalb 1 Sekunde zu dem Feststoffkatalysatorgranulat gegeben. Sofort begann eine heftige Gasentwicklung. Die Dauer der Gasbildung wurde protokolliert, wobei eine deutlich wahrnehmbare Abnahme der Gasbildung (Zunahme des gebildeten Gasvolumens <1 ml pro 5 Sekunden !) vereinfachend als Ende der Gasbildung betrachtet wurde. Nachfolgende Tabelle zeigt die erhaltenen Ergebnisse.

| **Beispiel** | **Dauer der Gasbildung (Sekunden)** |
|---|---|
| 1 (erfindungsgemäß) | 33 |
| 2 (erfindungsgemäß) | 16 |
| 3 (Vergleich) | 68 |

## Patentansprüche

1. Verfahren zur katalytischen Spontanzersetzung von Wasserstoffperoxid unter Verwendung eines Feststoffkatalysators, **dadurch gekennzeichnet, dass** der Feststoffkatalysator unter Verwendung mindestens eines exotherm zersetzbaren Platinvorläufers hergestellt worden ist, wobei der mindestens eine exotherm zersetzbare Platinvorläufer ausgewählt ist aus der Gruppe bestehend aus Platinoxalat-Komplexen und Platinethanolamin.

2. Verfahren nach Anspruch 1, wobei es sich bei dem Wasserstoffperoxid um unverdünntes Wasserstoffperoxid oder um eine wässrige 50 bis > 99 Gew.-% Wasserstoffperoxid enthaltende Zusammensetzung handelt.

3. Verfahren nach Anspruch 1 oder 2, wobei das Wasserstoffperoxid zum Feststoffkatalysator gegeben wird.

4. Verfahren nach Anspruch 3, wobei die Zugabe des Wasserstoffperoxids zum Feststoffkatalysator innerhalb von bis zu einer Minute erfolgt.

5. Verfahren nach einem der vorhergehenden Ansprüche, wobei die Zugabe durch Versprühen als Tröpfchen oder durch Flüssigzudosieren erfolgt.

6. Verfahren nach einem der vorhergehenden Ansprüche, wobei der Feststoffkatalysator einen oder mehrere poröse Katalysatorträger und mindestens eine katalytisch aktive Platinspezies umfasst.

7. Verfahren nach einem der vorhergehenden Ansprüche, wobei der Feststoffkatalysator ein mit Washcoat beschichteter oder unbeschichteter Monolithkatalysator, ein mit Washcoat beschichteter oder unbeschichtete Schüttgutformkörper umfassender Schüttgutkatalysator, ein mit Washcoat beschichteter oder unbeschichtete Schüttgutformkörper umfassendes Katalysatorbett oder ein mit Washcoat beschichteter Metallwaben- oder Metallgestrickkatalysator ist.

8. Verfahren nach Anspruch 6 oder 7, wobei das im Feststoffkatalysator enthaltene Platin der mindestens einen katalytisch aktiven Platinspezies zumindest anteilig dem mindestens einen exotherm zersetzbaren Platinvorläufer entstammt.

9. Verfahren nach einem der vorhergehenden Ansprüche, wobei der Platingehalt im Feststoffkatalysator 0,5 bis 200 g pro Liter Katalysatorvolumen beträgt.

10. Verfahren nach einem der Ansprüche 6 bis 9, wobei das Material des oder der porösen Katalysatorträger refraktäres Material umfasst oder daraus besteht.

11. Verfahren nach Anspruch 10, wobei das refraktäre Material ausgewählt ist aus der Gruppe bestehend aus Aluminiumoxiden, Titandioxid, Zirkonoxiden, Cer/Zirkon-Mischoxiden, Aluminiumsilikaten, Siliziumcarbiden, Siliziumnitriden und beliebigen Kombinationen davon.

12. Verfahren nach einem der vorhergehenden Ansprüche, wobei der mindestens eine exotherm zersetzbare Platinvorläufer in Form einer Lösung zur Herstellung des Feststoffkatalysators verwendet worden ist.

13. Verfahren nach einem der vorhergehenden Ansprüche, wobei neben dem mindestens einen exotherm zersetzbaren Platinvorläufer auch Vorläufer anderer Metalle oder Edelmetalle bei der Herstellung des Feststoffkatalysators verwendet worden sind.

14. Verfahren nach einem der Ansprüche 1 bis 12, wobei neben dem mindestens einen exotherm zersetzbaren Platinvorläufer keine Vorläufer anderer Metalle oder Edelmetalle zur Herstellung des im erfindungsgemäßen Verfahren verwendeten Feststoffkatalysators verwendet worden sind.

15. Verfahren nach einem der vorhergehenden Ansprüche, wobei neben dem mindestens einen exotherm zersetzbaren Platinvorläufer keine nicht-exotherm zersetzbaren Platinvorläufer zur Herstellung des Feststoffkatalysators verwendet worden sind.

## Claims

1. Method for catalytic spontaneous decomposition of hydrogen peroxide through the use of a solid catalyst, **characterised in that** the solid catalyst was produced through the use of at least one platinum precursor that can be decomposed exothermically, whereby the at least one platinum precursor that can be decomposed exothermically is selected from the group consisting of platinum oxalate complexes and platinum ethanolamine.

2. Method according to claim 1, whereby the hydrogen peroxide is undiluted hydrogen peroxide or a composition containing aqueous 50 to > 99 % by weight hydrogen peroxide.

3. Method according to claim 1 or 2, whereby the hydrogen peroxide is added to the solid catalyst.

4. Method according to claim 3, whereby the addition of the hydrogen peroxide to the solid catalyst takes place in up to one minute.

5. Method according to any one of the preceding claims, whereby the addition takes place through the spraying of droplets or through the dosing of liquid.

6. Method according to any one of the preceding claims, whereby the solid catalyst comprises one or more porous catalyst support(s) and at least one catalytically active platinum species.

7. Method according to any one of the preceding claims, whereby the solid catalyst is a washcoat-coated or uncoated monolith catalyst, a washcoat-coated or uncoated bulk moulded body-comprising bulk catalyst, a washcoat-coated or uncoated bulk moulded body-comprising catalyst bed or a washcoat-coated metal honeycomb catalyst or metal mesh catalyst.

8. Method according to claim 6 and 7, whereby the platinum contained in the solid catalyst originates from the at least one catalytically active platinum species, at least proportionate to the at least one platinum precursor that can be decomposed exothermically.

9. Method according to any one of the preceding claims, whereby the platinum content of the solid catalyst is 0.5 to 200 g per litre of catalyst volume.

10. Method according to any one of the claims 6 to 9, whereby the material of the porous catalyst support or supports comprises or consists of refractory material.

11. Method according to claim 10, whereby the refractory material is selected from the group consisting of aluminium oxides, titanium dioxide, zirconium oxides, cerium/zirconium mixed oxides, aluminium silicates, silicon carbides, silicon nitrides, and any combinations thereof.

12. Method according to any one of the preceding claims, whereby the at least one platinum precursor that can be decomposed exothermically was used in the form of a solution for production of the solid catalyst.

13. Method according to any one of the preceding claims, whereby, aside from the at least one platinum precursor that can be decomposed exothermically, precursors of other metals or precious metals were also used for production of the solid catalyst.

14. Method according to any one of the claims 1 to 12, whereby, aside from the at least one platinum precursor that can be decomposed exothermically, no precursors of other metals or precious metals were used for production of the solid catalyst used in the method according to the invention.

15. Method according to any one of the preceding claims, whereby, aside from the platinum precursor that can be decomposed exothermically, no platinum precursors that cannot be decomposed exothermically were used for production of the solid catalyst.

## Revendications

1. Procédé de décomposition spontanée catalytique de peroxyde d'hydrogène en utilisant un catalyseur solide, **caractérisé en ce que** le catalyseur solide a été fabriqué en utilisant au moins un précurseur de platine pouvant être décomposé de manière exothermique, dans lequel l'au moins un précurseur de platine pouvant être décomposé de manière exothermique est sélectionné parmi le groupe constitué de complexes d'oxalate de platine et d'éthanolamine de platine.

2. Procédé selon la revendication 1, dans lequel il s'agit pour le peroxyde d'hydrogène de peroxyde d'hydrogène non dilué ou d'une composition contenant du peroxyde d'hydrogène aqueux à 50 à > 99 % en poids.

3. Procédé selon la revendication 1 ou 2, dans lequel le peroxyde d'hydrogène est ajouté au catalyseur solide.

4. Procédé selon la revendication 3, dans lequel l'addition du peroxyde d'hydrogène au catalyseur solide s'effectue en l'espace de jusqu'à une minute.

5. Procédé selon une des revendications précédentes, dans lequel l'addition s'effectue par pulvérisation en tant que gouttelettes ou par addition dosée liquide.

6. Procédé selon une des revendications précédentes, dans lequel le catalyseur solide comprend un ou plusieurs supports de catalyseur poreux et au moins une espèce de platine active du point de vue catalytique.

7. Procédé selon une des revendications précédentes, dans lequel le catalyseur solide est un catalyseur monolithique enduit d'un washcoat ou non enduit, un catalyseur à billes comprenant des corps moulés de billes, enduit d'un washcoat ou non enduit, un lit de catalyseur comprenant des corps moulés de billes, enduit d'un washcoat ou non enduit, ou un catalyseur métallique en nid d'abeilles ou tricotage enduit d'un washcoat.

8. Procédé selon la revendication 6 ou 7, dans lequel le platine contenu dans le catalyseur solide de l'au moins une espèce de platine active du point de vue catalytique provient au moins proportionnellement de l'au moins un précurseur de platine pouvant être décomposé de manière exothermique.

9. Procédé selon une des revendications précédentes, dans lequel la teneur en platine dans le catalyseur solide va de 0,5 à 200 g par litre de volume de catalyseur.

10. Procédé selon une des revendications 6 à 9, dans lequel le matériau du ou des supports de catalyseur poreux comprend un matériau réfractaire ou se compose de celui-ci.

11. Procédé selon la revendication 10, dans lequel le matériau réfractaire est sélectionné parmi le groupe constitué d'oxydes d'aluminium, du dioxyde de titane, d'oxydes de zirconium, d'oxydes mixtes de cérium/zirconium, de silicates d'aluminium, de carbures de silicium, de nitrures de silicium et de combinaisons quelconques de ceux-ci.

12. Procédé selon une des revendications précédentes, dans lequel l'au moins un précurseur de platine pouvant être décomposé de manière exothermique a été utilisé sous forme d'une solution pour la fabrication du catalyseur solide.

13. Procédé selon une des revendications précédentes, dans lequel des précurseurs d'autres métaux ou de métaux nobles ont également été utilisés lors de la fabrication du catalyseur solide outre l'au moins un précurseur de platine pouvant être décomposé de manière exothermique.

14. Procédé selon une des revendications 1 à 12, dans lequel aucun précurseur d'autres métaux ou de métaux nobles n'a été utilisé pour la fabrication du catalyseur solide utilisé dans le procédé selon l'invention outre l'au moins un précurseur de platine pouvant être décomposé de manière exothermique.

15. Procédé selon une des revendications précédentes, dans lequel aucun précurseur de platine pouvant être décomposé de manière non exothermique n'a été utilisé pour la fabrication du catalyseur solide outre l'au moins un précurseur de platine pouvant être décomposé de manière exothermique.
